(19) **Europäisches Patentamt / European Patent Office / Office européen des brevets**

(11) **EP 1 918 579 B1**

(12) **EUROPEAN PATENT SPECIFICATION**

(45) Date of publication and mention
of the grant of the patent:
**20.12.2017 Bulletin 2017/51**

(51) Int Cl.:
*F02P 5/15* (2006.01)     *F02P 7/06* (2006.01)
*F02P 1/08* (2006.01)     *F02P 3/08* (2006.01)
*F02D 41/00* (2006.01)

(21) Application number: **07254152.7**

(22) Date of filing: **19.10.2007**

(54) **Ignition device for internal combustion engine**

Zündvorrichtung für Verbrennungsmotoren

Dispositif d'allumage pour moteur à combustion interne

(84) Designated Contracting States:
**AT DE ES IT**

(30) Priority: **20.10.2006 JP 2006285963**

(43) Date of publication of application:
**07.05.2008 Bulletin 2008/19**

(73) Proprietor: **MAHLE Electric Drives Japan Corporation**
**Shizuoka 410-0022 (JP)**

(72) Inventor: **Sato, Hiroyasu**
**Shizuoka-ken (JP)**

(74) Representative: **Wilson Gunn**
**Blackfriars House**
**The Parsonage**
**5th Floor**
**Manchester M3 2JA (GB)**

(56) References cited:
**JP-A- 60 026 174**     **US-A1- 2002 112 711**
**US-A1- 2005 139 194**     **US-B1- 6 405 687**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to an ignition device for an internal combustion engine that controls an ignition position (a crank angle position where the engine is ignited) of the internal combustion engine using a microprocessor.

BACKGROUND ART

As disclosed in Japanese Patent Application Laid-Open Publication No. 2001-200776, an ignition device for an internal combustion engine is comprised of an ignition circuit that controls a primary current of an ignition coil to induce a high voltage for ignition in a secondary coil of the ignition coil when receiving an ignition signal, and an ignition position control portion that controls a crank angle position (an ignition position) where the ignition signal is provided to the ignition circuit.

To the internal combustion engine, a signal generator is mounted for obtaining rotation information of the engine including rotational speed information and rotational angle information. The signal generator is generally constituted by an inductor generator. The signal generator used in the conventional ignition device is comprised so as to generate a reference pulse signal at a reference position set at a crank angle position sufficiently advanced from a top dead center position that is a crank angle position where a piston of the engine reaches a top dead center, and generate a predetermined ignition pulse signal having a different polarity from the reference pulse signal at a predetermined ignition position set near the top dead center position.

The reference position is generally set to a maximum advanced position of the engine, or a position further advanced from the maximum advanced position. The reference position is used as a position where measurement of an ignition position is started. The predetermined ignition position is set to a position suitable as an ignition position at the start and idling of the engine.

Generally, an ignition control portion that controls an ignition position of an internal combustion engine is comprised of idling time ignition control means for controlling ignition at the start and idling of the engine, and normal operation time ignition control means for controlling ignition in normal operation where a rotational speed of the engine exceeds a set value.

The normal operation time ignition position control means is comprised of, for example, rotational speed arithmetical operation means for arithmetically operating a rotational speed of the engine from an interval of a signal generator mounted to the internal combustion engine generating a reference pulse signal, ignition position arithmetical operation means for arithmetically operating an ignition position of the engine with respect to the arithmetically operated rotational speed, and ignition signal generation means for starting measurement of the arithmetically operated ignition position when the signal generator generates the reference pulse signal, and generating an ignition signal when the measurement of the ignition position is completed (when it is detected that a crank angle position of the engine matches the arithmetically operated ignition position). These means are comprised by a microprocessor executing predetermined programs.

It is supposed that the ignition position is arithmetically operated by using rotation information obtained from an output of the signal generator, and the engine is ignited at the arithmetically operated ignition position even at the start and idling of the engine. However, at the start and idling of the engine, rotation of the engine is unstable, the rotational speed of a crankshaft minutely changes with changes in stroke of the engine, and correct rotational speed information cannot be obtained from the pulse signal generated by the signal generator. Thus, it is difficult to precisely arithmetically operate the ignition position, and the arithmetically operated ignition position cannot be precisely detected. Thus, the idling time ignition control means for controlling the ignition position at the start and idling of the engine is comprised so as to provide an ignition signal to an ignition circuit when the signal generator generates a predetermined ignition pulse signal at a predetermined ignition position rather than provide the ignition signal to the ignition circuit at the arithmetically operated ignition position.

In the internal combustion engine, if the ignition position is advanced from the top dead center position at the start, a piston in a cylinder of the engine is pushed back when the engine is ignited, which may cause a failure in the start of the engine. A phenomenon in which a piston is pushed back at the start of an internal combustion engine started by a kick starter is referred to as kicking back. If the kicking back occurs at the start of the engine, an impact is transmitted from a crankshaft to a kick pedal in reverse rotation of the crankshaft, which may harm a driver. Thus, preventing the occurrence of the kicking back is one important object of the internal combustion engine.

In order to prevent the occurrence of the kicking back, it is only necessary to determine a rotational direction of the engine at the start of the engine, and prohibit the ignition device from performing an ignition operation when reverse rotation of the engine is detected. A known method of determining the rotational direction of the engine includes a method providing two signal generators and using the fact that a phase relationship between pulse signals generated by the signal generators differs depending on the rotational direction of the engine, or a method using the fact that a phase relationship between a pulse signal generated by a signal generator and an output voltage of an AC generator mounted to the engine differs depending on the rotational direction of the engine.

However, in order to determine the rotational direction of the engine by the above described method, the phase relationship between the two signals needs to be determined, which takes trouble in determination of the rotational direction and may cause a delay in ignition control.

Thus, it is supposed that the crank angle position where the signal generator generates the predetermined ignition pulse signal is set to a position delayed from the top dead center position, and the engine is ignited at the crank angle position delayed from the top dead center position at the start of the engine. Comprised as described above, the engine is ignited only when the piston exceeds the top dead center, thereby preventing the occurrence of the kicking back at the start. However, in idling after the start of the engine, the ignition position is excessively delayed to prevent stable idling.

For example, in an internal combustion engine, an ignition position at the start of the engine is set to a position delayed two degrees from the top dead center, thereby preventing occurrence of kicking back. However, an optimum ignition position in idling is a position advanced 10 degrees from the top dead center, and thus setting the ignition position at the start and idling to a position delayed from the top dead center position with the emphasis on preventing the kicking back prevents stable idling.

Thus, in the ignition device disclosed in Japanese Patent Application Laid-Open Publication No. 2001-200776, the predetermined ignition position where the signal generator generates the predetermined ignition pulse signal is set to a crank angle position delayed from the top dead center position, and a singularity detection circuit that detects, as a singularity, a zero cross point or a peak point of an output voltage of an AC generator driven by the engine is provided to determine an ignition position in idling with a singularity detection signal generated by the singularity detection circuit at a crank angle position suitable as the ignition position in idling.

The invention disclosed in Japanese Patent Application Laid-Open Publication No. 2001-200776 can prevent the occurrence of the kicking back and also prevent the ignition position in idling from being excessively delayed. However, this invention requires, besides the signal generator, the singularity detection circuit that detects, as the singularity, the zero cross point or the peak point of the output voltage of the AC generator driven by the engine, which makes a construction of hardware complicated.

A phase of the singularity such as the zero cross point or the peak point of the output voltage of the AC generator changes depending on output current of the generator in idling, and thus if the ignition position in idling is determined by the output signal of the singularity detection circuit, the ignition position in idling may change to make idling unstable.

Thus, the present invention has an object to provide an ignition device for an internal combustion engine that can set an ignition position at the start and idling to an optimum position to prevent occurrence of kicking back and allow stable rotation in idling without complicated processing for determining a rotational direction of the engine or a complicated construction of hardware. US2005/0139194A1 shows a igntion device for internal combustion having a similar control of the ignition timing, but different pulse signals. US2002/0112711A1 shows an ignition system having similar pulse signals, but a different ignition timing control; in particular, US2002/0112711A1 allows the forward and reverse rotation of the combustion engine.

## DISCLOSURE OF THE INVENTION

The present invention is directed to an ignition device for an internal combustion engine including: an ignition circuit that generates a high voltage for ignition to be supplied to an ignition plug mounted to a cylinder of the internal combustion engine when receiving an ignition signal; and an ignition position control portion that controls a crank angle position (an ignition position) that provides the ignition signal to the ignition circuit.

In the present invention, an inductor signal generator is provided comprised so as to generate a first pulse signal having a first polarity when a crank angle position of the internal combustion engine matches a first crank angle position set to a position sufficiently advanced from a crank angle position (a top dead center position) corresponding to a top dead center of a piston in a compression stroke, generate a second pulse signal having a second polarity when the crank angle position of the engine matches a second crank angle position set to a position delayed from the first crank angle position, advanced from the top dead center position and suitable as an ignition position in idling, and generate a third pulse signal having the second polarity when the crank angle position of the engine matches a third crank angle position set to a position delayed from the top dead center position and suitable as a first ignition position at the start of the engine, during forward rotation of the internal combustion engine.

Then, in the present invention, the ignition position control portion includes: start time ignition signal providing means for providing an ignition signal to the ignition circuit at the third crank angle position immediately in response to the third pulse signal when it is detected that the signal generator successively generates the second pulse signal and the third pulse signal having the same polarity for causing first ignition at the start of the internal combustion engine; idling time ignition signal providing means for providing an ignition signal to the ignition circuit at the second crank angle position in response to the second pulse signal when the first ignition is completed and a rotational speed of the internal combustion engine is an idling rotational speed or less; and normal rotation time ignition signal providing means for arithmetically operating an ignition position with respect to a control condition including the rotational speed and providing an ignition signal to the ignition circuit at a crank angle position that matches the arithmetically operated ignition position when the rotational speed of the internal combustion engine exceeds the idling rotational speed.

As described above, when the first ignition at the start is performed at the position delayed from the top dead center position, the first ignition is performed only when the piston exceeds the top dead center, thereby preventing occurrence of kicking back.

Comprised as described above, the second pulse signal and the third pulse signal have the same polarity, and thus when the two pulse signals having the same polarity are successively generated, it can be easily determined that the pulse signal generated the second time is the third pulse signal. When the piston in the cylinder first ignited at the start of the engine cannot exceed the top dead center and is pushed back, the signal generator does not successively generate two pulse signals having the same polarity, and it is not recognized that the signal generator generates the third pulse signal. Thus, when the piston cannot reach the top dead center and is pushed back, an ignition operation can be reliably prevented and kicking back can be reliably prevented without special processing for determining the rotational direction of the engine.

Comprised as described above, the first ignition position at the start and the ignition position in idling can be determined by using only the output pulse of one signal generator, and there is no need to provide a special signal generation circuit such as a singularity detection circuit for detecting a singularity of an output of the generator or a plurality of signal generators, thereby preventing a construction of hardware from being made complicated.

Further, the position where the signal generator generates the pulse signal does not change. Thus, comprised as described above, the risk of the change in the ignition position in idling can be prevented to allow stable idling.

In a preferred aspect of the present invention, the signal generator includes: a rotor that includes a reluctor having a first portion extending circumferentially of a crankshaft of the internal combustion engine and a second portion placed rearward of the first portion in a forward rotational direction of the crankshaft, having a first edge and a second edge formed at one and the other circumferential ends, and having a middle edge formed at a boundary between the first portion and the second portion, and is provided so as to rotate with the crankshaft; and a signal armature that generates a pulse signal when detecting each edge of the reluctor, and the signal generator is comprised so that the signal armature detects the first edge of the reluctor and generates the first pulse signal when the crank angle position of the internal combustion engine matches the first crank angle position during forward rotation of the internal combustion engine, the signal armature detects the middle edge of the reluctor and generates the second pulse signal having a different polarity from the first pulse signal when the crank angle position of the internal combustion engine matches the second crank angle position during forward rotation of the internal combustion engine, and the signal armature detects the second edge and generates the third pulse signal having the same polarity as the second pulse signal when the crank angle position matches the third crank angle position during forward rotation of the internal combustion engine.

In the preferred aspect of the present invention, the reluctor is constituted by a protrusion formed on an outer periphery of the rotor, the first portion of the reluctor has a first width and extends circumferentially of the crankshaft, and a second portion has a second width smaller than the first width and extends circumferentially of the crankshaft. In this case, the first portion and the second portion are formed to have a uniform height circumferentially of the crankshaft.

In another preferred aspect of the present invention, the reluctor is constituted by a protrusion formed on an outer periphery of the rotor, the first portion of the reluctor has a first height and extends circumferentially of the crankshaft, and the second portion has a second height smaller than the first height and extends circumferentially of the crankshaft. In this case, the first portion and the second portion are formed to have a uniform width circumferentially of the crankshaft.

BRIEF DESCRIPTION OF THE DRAWINGS

The above and other objects and features of the invention will be apparent from the detailed description of the preferred embodiment of the invention, which is described and illustrated with reference to the accompanying drawings, in which;

Figure 1 is a schematic circuit diagram of an exemplary construction of hardware of an embodiment of the present invention
Figures 2A and 2B are a top view and a front view of a rotor of a signal generator used in the embodiment;
Figure 3 is a waveform chart showing a waveform of a pulse signal generated by the signal generator in Figure 2 during forward rotation of an internal combustion engine;
Figure 4 is a waveform chart showing a waveform of a pulse signal output by the signal generator used in the present invention when a piston is pushed back before a crank angle position reaches a second crank angle position at the start of the engine;
Figure 5 is a waveform chart showing a waveform of a pulse signal output by the signal generator used in the present invention when the piston is pushed back when the crank angle position reaches a position between the second crank angle position and a top dead center position at the start of the engine;
Figure 6 is a block diagram of an exemplary construction of an ignition position control portion comprised by a microprocessor in the embodiment of the present invention;

Figure 7 is a flowchart showing an algorithm of an interruption processing executed by the microprocessor when the signal generator generates a pulse signal (a first pulse signal) having a negative polarity in the embodiment of the present invention;

Figure 8 is a flowchart showing an algorithm of an interruption processing executed by the microprocessor when the signal generator generates a pulse signal (a second pulse signal) having a positive polarity in the embodiment of the present invention; and

Figure 9 is a flowchart showing an algorithm of an interruption processing executed by the microprocessor when an ignition timer completes measurement of clocking data for detecting an ignition position in the embodiment of the present invention.

Detailed Description of the Invention

Now, the present invention will be described in detail with reference to the drawings. In the description below, an internal combustion engine is a single cylinder two cycle engine though the present invention may be applied to a two-cycle or four-cycle internal combustion engine having any number of cylinders.

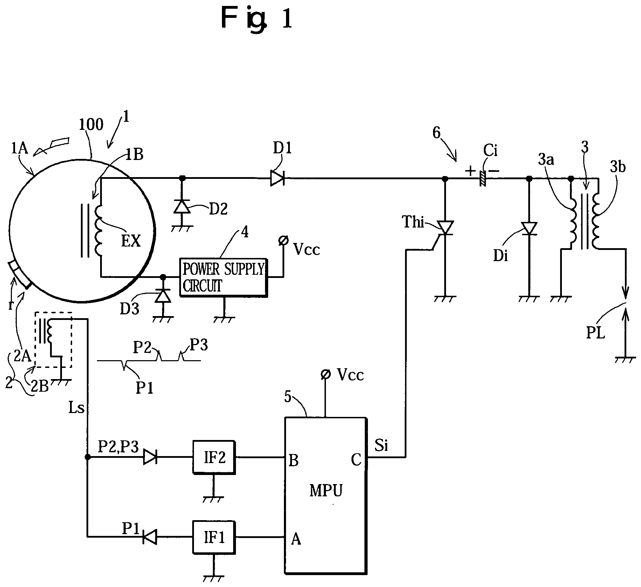

Figure 1 shows an exemplary construction of hardware of an ignition device for an internal combustion engine according to the present invention. In Figure 1, a reference numeral 1 denotes a magnet type AC generator of an outer rotor type mounted to an internal combustion engine. The magneto generator 1 is comprised of a rotor 1A including a cup-like rotor yoke 100 and an unshown permanent magnet secured to an inner periphery of a peripheral wall portion of the rotor yoke and mounted to a crankshaft of the internal combustion engine, and a stator 1B including a stator iron core having a magnetic pole portion facing a magnetic pole of the rotor and an exciter coil EX wound around the stator iron core, and induces an AC voltage in the exciter coil EX in synchronization with rotation of the engine.

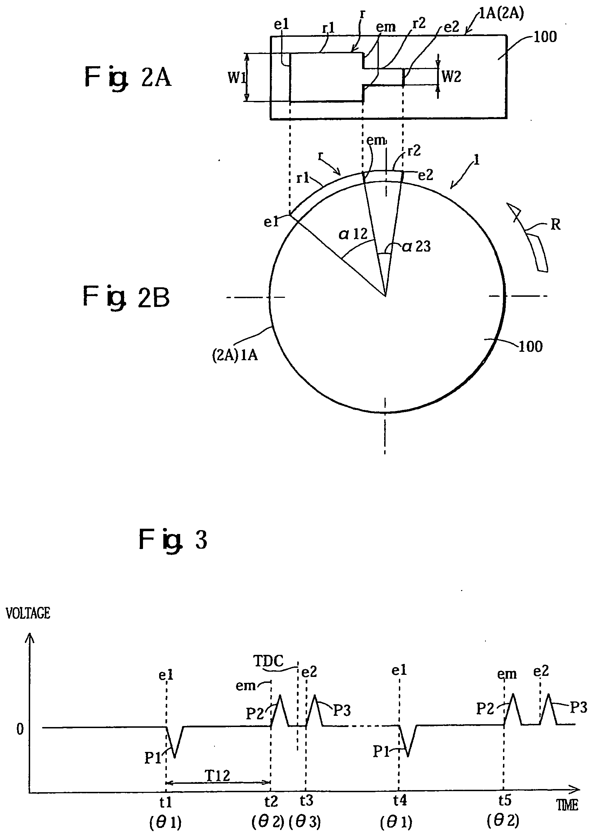

A reference numeral 2 denotes an inductor signal generator comprised of a rotor 2A and a signal armature 2B. In the shown example, the rotor yoke of the magneto generator 1 also serves as the rotor 2A of the signal generator 2, and a reluctor (an inductor) r is formed on an outer periphery of the rotor yoke 100. As schematically shown in Figures 2A and 2B, the reluctor r is constituted by a protrusion formed on an outer periphery of the rotor 2A, and has a first portion r1 having a first width W1 and extending circumferentially of the crankshaft of the engine, and a second portion r2 placed rearward of the first portion in a forward rotational direction R of the crankshaft, having a second width W2 smaller than the first width W1, and extending circumferentially of the crankshaft. As shown in Figure 2B, the first portion r1 and the second portion r2 are formed to have a uniform height circumferentially of the crankshaft. A first edge e1 and a second edge e2 are formed at one circumferential end (an end positioned forward in the forward rotational direction R) and the other circumferential end (an end positioned rearward in the forward rotational direction R) of the reluctor r, and a middle edge em is formed at a boundary between the first portion r1 and the second portion r2.

The signal armature 2B is a known one including an iron core having, at a tip, a magnetic pole portion facing the reluctor r, a signal coil Ls wound around the iron core, and a permanent magnet magnetically connected to the iron core, and detects an edge of the reluctor r to generate a pulse signal as shown in Figure 3. Figure 3 shows the pulse signal output by the signal armature 2B during forward rotation of the engine. In Figure 3, a reference character P1 denotes a first pulse signal having a first polarity (a negative polarity in the shown example) generated when the signal armature detects the first edge e1 of the reluctor, and P2 and P3 denote a second pulse signal and a third pulse signal having a second polarity (a positive polarity in the shown example) generated when the signal armature detects the middle edge em and the second edge e2 of the reluctor.

In the present invention, as shown in Figure 3, a dimension and a placement position of each portion of the reluctor r and a placement position of the signal armature 2B are set so that, during the forward rotation of the engine, the signal armature detects the first edge e1 of the reluctor and generates the first pulse signal P1 having the first polarity when the crankshaft matches a first crank angle position $\theta1$ set to a position sufficiently advanced from a top dead center position at time t1, the signal armature detects the middle edge em of the reluctor and generates the second pulse signal P2 having the second polarity when the crank angle position of the engine matches a second crank angle position $\theta2$ delayed from the first crank angle position $\theta1$ and advanced from the top dead center position TDC at time t2, and the signal armature detects the second edge e2 of the reluctor and generates the third pulse signal P3 having the second polarity when the crank angle position of the engine matches a third crank angle position $\theta3$ delayed from the top dead center position TDC at time t3. Thus, as shown in Figure 2B, a polar arc angle $\alpha12$ of the first portion r1 of the reluctor r is set to be equal to an angle between the first crank angle position $\theta1$ and the second crank angle position $\theta2$, and a polar arc angle $\alpha23$ of the second portion r2 of the reluctor is set to be equal to an angle between the second crank angle position $\theta2$ and the third crank angle position $\theta3$.

The first crank angle position $\theta1$ where the first pulse signal P1 is generated is set to a position suitable for starting measurement of an arithmetically operated ignition position, and the second crank angle position $\theta2$ where the second pulse signal P2 is generated is set to a position suitable as an ignition position in idling. The third crank angle position $\theta3$ where the third pulse signal P3 is generated is set to a position suitable as a first ignition position at the start.

During the forward rotation of the engine, as shown in Figure 3, the second pulse signal P2 and the third pulse signal P3 having the second polarity are successively generated. Thus, it can be determined that the engine rotates forward when the two pulse signals having the same second polarity are successively generated, and it can be determined that the pulse signal having the second polarity generated the second time is the third pulse signal generated at the third crank angle position (the first ignition position at the start) set to the position delayed from the top dead center position. In the present invention, when it is detected that the two pulse signals having the same polarity are successively generated at the start of the engine, an ignition operation is performed in response to the third pulse signal P3 generated the second time, and thus a first ignition operation at the start is performed at the position delayed from the top dead center position.

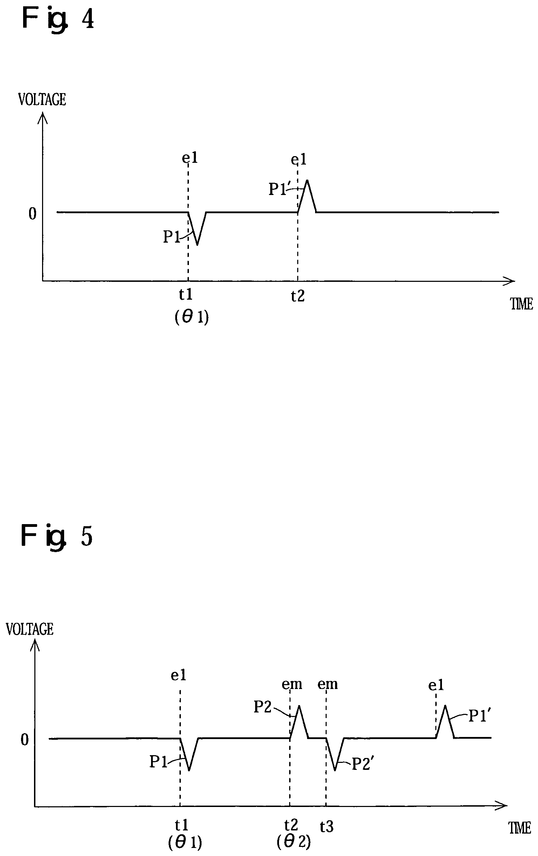

Figure 3 shows a waveform of the pulse signal output by the signal generator 2 during the forward rotation of the engine. During reverse rotation of the engine, the pulse signal generated by the signal generator shows a different waveform from that in Figure 3. For example, when the piston is pushed back before reaching the top dead center at the start of the engine, and the engine is reversed before the signal armature detects the middle edge em of the reluctor, as shown in Figure 4, the first edge e1 of the reluctor is first detected at the time t1 to generate the pulse signal P1, and then a pulse signal P1' having the second polarity is generated when the first edge e1 is again detected at the time t2 by the reverse rotation of the engine. At this time, the two pulse signals having the second polarity are not successively generated, and thus it can be determined that the engine is reversed without exceeding the top dead center. In the present invention, when the third pulse signal P3 is not generated at the start of the engine, the ignition operation is not performed.

When the signal armature detects the middle edge em of the reluctor at the time t2 at the start of the engine, and then the engine is reversed without the piston exceeding the top dead center, as shown in Figure 5, a pulse signal P2' having the first polarity is generated when the middle edge em is again detected at the time t3. Also in this case, the pulse signals P2 and P3 having the same polarity are not successively generated, and thus it can be determined that the engine is reversed. In the present invention, the first ignition operation is performed only when it is detected that the two pulse signals having the same polarity (the second polarity) are successively generated at the start of the engine, and thus the ignition operation is not performed in the case in Figure 5.

In Figure 1, a reference numeral 3 denotes an ignition coil having a primary coil 3a and a secondary coil 3b wound around an iron core, and one end of the primary coil 3a is grounded. One end of an ignition capacitor Ci is connected to the other end of the primary coil 3a, and a thyristor Thi that constitutes a discharge switch is connected between the other end of the ignition capacitor Ci and the ground with a cathode directed to the ground. A diode Di is connected across the primary coil 3a of the ignition coil with a cathode directed to the ground. The other end of the ignition capacitor Ci is connected to one end of an exciter coil EX through a diode D1 with a cathode directed to the capacitor. Diodes D2 and D3 are connected between one end of the exciter coil EX and the ground and between the other end thereof and the ground with anodes directed to the ground, a current passes through a circuit of the exciter coil EX - the diode D1 - the ignition capacitor Ci - the diode Di and the primary coil 3a - the diode D3 - the exciter coil EX with an output voltage of a positive half wave of the exciter coil EX, and the ignition capacitor Ci is charged to the shown polarity. One end of the secondary coil 3b of the ignition coil 3 is connected to a non-ground terminal of the primary coil 3a, and the other end of the secondary coil 3b is connected to a non-ground terminal of an ignition plug PL mounted to the cylinder of the engine through a high-tension code. In this example, a capacitor discharge ignition circuit 6 is comprised of the ignition coil 3, the ignition capacitor Ci, the thyristor Thi, and the diode Di.

In the shown example, a power supply circuit 4 that converts an output voltage of a negative half wave of the exciter coil into a constant DC voltage is connected between the other end of the exciter coil and the ground. The power supply circuit 4 is comprised of a power supply capacitor charged with the output voltage of the negative half wave of the exciter coil, and a control circuit that performs control to maintain a constant voltage across the power supply capacitor, and generates a certain DC voltage Vcc across the power supply capacitor. A charging current of the power supply capacitor is fed back to the exciter coil EX through the diode D2.

In order to control ignition timing of the engine, a microprocessor (MPU) 5 is provided, the first pulse signal P1 having the first polarity (the negative polarity in the shown example) among the pulse signals P1 to P3 output by the signal generator 2 is input to a port A of the microprocessor 5 through an interface circuit IF1, and the second pulse signal P2 and the third pulse signal P3 having the second polarity are input to a port B of the microprocessor 5 through an interface circuit IF2. The interface circuits IF1 and IF2 are constituted by waveform shaping circuits that convert the pulse signal generated by the signal coil into a signal having a waveform recognizable by the microprocessor 5. The microprocessor 5 executes a predetermined program to comprise the ignition position control portion that controls the crank angle position (the ignition position) where an ignition signal Si is provided to the ignition circuit, and the ignition signal Si is output from a port C at the ignition position of the internal combustion engine. The ignition signal Si is provided to a gate of the thyristor Thi. The microprocessor 5 and the interface circuits IF1 and IF2 operate with the DC voltage Vcc output by the power supply circuit 4 as a power supply voltage.

In the shown ignition device, when the ignition signal Si is provided from the microprocessor 5 to the gate of the thyristor Thi, the thyristor Thi to which the voltage across the ignition capacitor Ci is applied in a forward direction conducts, and charges accumulated in the ignition capacitor Ci are discharged through the thyristor Thi and the primary coil 3a of the ignition coil. The discharge induces a high voltage in the primary coil 3a of the ignition coil. Since the voltage is increased by a ratio of voltage increase between the primary and secondary coils of the ignition coil, a high voltage for ignition is induced in the secondary coil of the ignition coil. The high voltage is applied to the ignition plug PL, and thus spark discharge occurs in the ignition plug PL to ignite the engine.

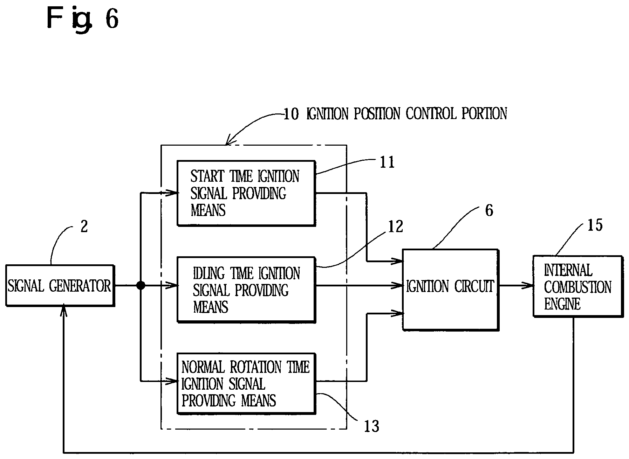

Figure 6 shows a construction of an ignition position control portion 10 implemented by the microprocessor 5. The ignition position control portion 10 is comprised of start time ignition signal providing means 11, idling time ignition signal providing means 12, and normal rotation time ignition signal providing means 13.

The start time ignition signal providing means 11 is comprised so as to provide an ignition signal to the ignition circuit at the third crank angle position θ3 in response to the third pulse signal P3 when it is detected that the signal generator 2 successively generates the second pulse signal P2 and the third pulse signal P3 having the same polarity for causing first ignition at the start of the internal combustion engine 15.

The idling time ignition control means 12 is comprised so as to provide an ignition signal to the ignition circuit at the second crank angle position in response to the second pulse signal when the first ignition at the start is completed, and the rotational speed of the internal combustion engine is an idling rotational speed or less.

Further, the normal rotation time ignition signal providing means 13 is comprised so as to arithmetically operate an ignition position with respect to a control condition including the rotational speed and provide an ignition signal Si to the ignition circuit 6 at a crank angle position that matches the arithmetically operated ignition position when the rotational speed of the internal combustion engine exceeds the idling rotational speed.

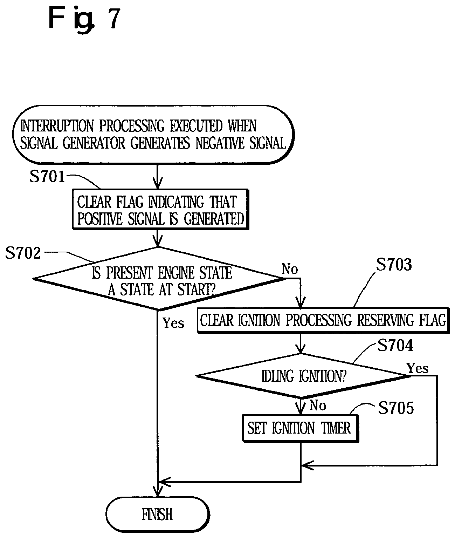

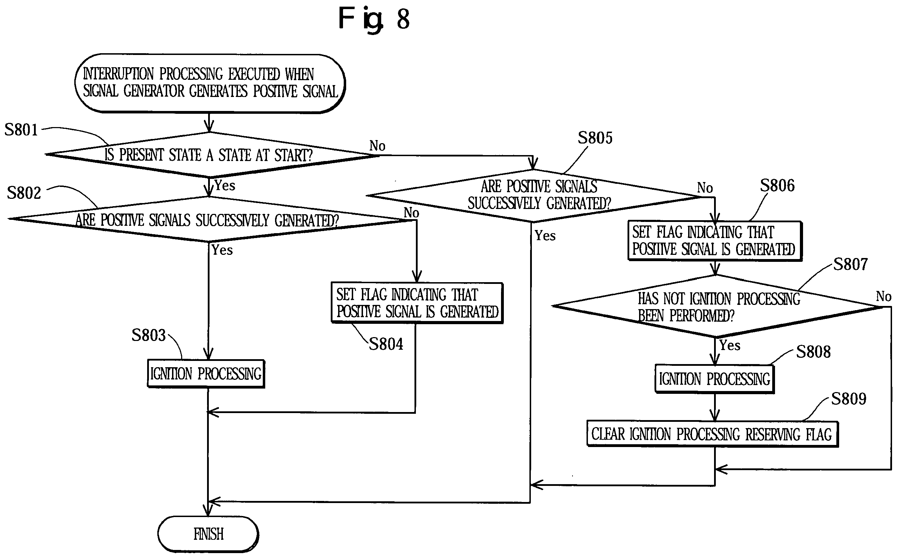

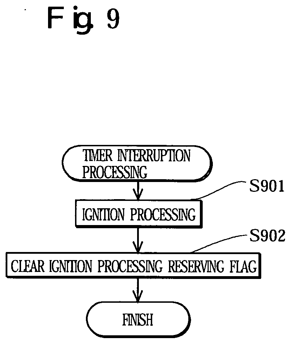

Figures 7 to 9 show flowcharts of algorithms executed by the microprocessor 5 for comprising the ignition position control portion 10 in Figure 6. Figure 7 shows an interruption processing executed when the signal generator 2 generates the pulse signal having the negative polarity (the first polarity), and Figure 8 shows an interruption processing executed when the signal generator 2 generates the pulse signal having the positive polarity (the second polarity). Figure 9 shows a processing executed when an ignition timer provided in the microprocessor completes measurement of set clocking data.

It is supposed that the signal generator first generates the first pulse signal P1 having the negative polarity at the start of the engine. At this time, the microprocessor performs Step S701 in the processing in Figure 7, and clears a flag indicating that the pulse signal having the positive polarity is generated. Then, the process proceeds to Step S702, and it is determined whether the present engine state is a state at the start. When it is determined that the present engine state is the state at the start, this processing is finished without performing any processing thereafter. When it is determined in Step S702 that the present engine state is not the state at the start, the process moves to Step S703 and an ignition processing reserving flag is set, and then in Step S704, it is determined whether ignition performed next is ignition in idling. When it is determined that the ignition performed next is ignition in idling, this processing is finished without performing any processing thereafter. When it is determined in S704 that the ignition performed next is not the ignition in idling, in Step S705, clocking data Tx to be measured by the ignition timer for detecting an ignition position θi arithmetically operated with respect to the rotational speed of the engine in an unshown main routine is set in the ignition timer, and this processing is finished.

The clocking data Tx set in the ignition timer is time required for the engine to rotate from the first crank angle position (the reference crank angle position) θ1 to the arithmetically operated ignition position at the present rotational speed. The clocking data Tx is calculated from time between generation time of the first pulse signal P1 measured one turn before and generation time of the second pulse signal P2 (time required for the engine to rotate from the first crank angle position θ1 to the second crank angle position θ2) T12, an angle α12 between the first crank angle position θ1 and the second crank angle position θ2, and an angle α1i between the first crank angle position (the reference crank angle position) θ1 and the arithmetically operated ignition position θi by the following expression (1).

$$Tx = (\alpha 1i/\alpha 12) \times T12 \qquad \dots (1)$$

The rotational speed of the engine is arithmetically operated from an interval of the signal generator 2 generating the pulse signal P1 having the first polarity (time required for one turn of the crankshaft). The ignition position is arithmetically operated by searching an ignition position arithmetical operation map with respect to the arithmetically operated rotational speed.

Then, when the signal generator 2 generates the pulse signal P2 having the positive polarity (the second polarity), an interruption processing in Figure 8 is performed. In this processing, first in Step S801, it is determined whether the present state is a state at the start. When it is determined that the present state is the state at the start, in Step S802, a flag indicating whether the pulse signal having the positive polarity is generated is checked, and it is determined whether the pulse signals having the positive polarity are successively generated. When it is determined that the pulse signals having the positive polarity are successively generated (when this pulse signal having the positive polarity is the third pulse signal), in Step S803, the ignition signal Si is generated from the port C to cause an ignition operation at a generation position of the third pulse signal P3 (cause an ignition processing), and this processing is finished. When it is determined in Step S802 that the pulse signals having the positive polarity are not successively generated, in Step S804, a flag indicating that the pulse signal having the positive polarity is generated is set, and this processing is finished.

When it is determined in Step S801 that the present state is not the state at the start, it is determined whether the pulse signals having the positive polarity are successively generated by checking the state of the flag. When it is determined that the pulse signals having the positive polarity are successively generated (when the flag is set), this processing is finished without performing any processing thereafter. When it is determined in Step S805 that the pulse signals having the positive polarity are not successively generated (when this pulse signal having the positive polarity is the second pulse signal P2), the process moves to Step S806, and a flag indicating that the pulse signal having the positive polarity is generated is set. Then in Step S807, it is checked whether the ignition processing reserving flag is set, and thus it is determined whether the ignition processing has been performed. When it is determined that the ignition processing has not been performed (when the ignition processing reserving flag is set), the process proceeds to Step S808, and the ignition signal Si is generated from the port C to cause an ignition operation at a generation position of the second pulse signal P2, the ignition processing reserving flag is cleared in Step S809, and then this processing is finished. When it is determined in Step S807 that the ignition processing has been performed, this processing is finished without performing any processing thereafter.

When the ignition timer in the microprocessor completes measurement of the clocking data set in Step S705 in Figure 7 (when the arithmetically operated ignition position is detected), an interruption processing in Figure 9 is performed. In the interruption processing, the ignition signal Si is generated from the port C to cause the ignition operation in Step S901, and the ignition processing reserving flag is cleared in Step S902.

According to the algorithms in Figures 7 to 9, the start time ignition signal providing means 11 is comprised by Steps S801, S802, S803 and S804 in the processing in Figure 8, and the idling time ignition signal providing means is comprised by Steps S701, S702, S703 and S704 in Figure 7 and Steps S801, S805 to S809 in Figure 8. The normal rotation time ignition signal providing means 13 is comprised by Steps S701, S702, S703, S704 and 705 in Figure 7 and the processing in Figure 9.

In the above description, the internal combustion engine is the single cylinder engine, but the present invention may be, of course, applied to an ignition device that ignites a multi-cylinder internal combustion engine. When the multi-cylinder internal combustion engine is ignited, for example, it is only necessary that ignition circuits 6 of the number of cylinders are provided, and an ignition signal is provided from a microprocessor to the ignition circuit for each cylinder at an ignition position of each cylinder.

In the above example, the first polarity of the pulse signal generated by the signal generator is the negative polarity, and the second polarity is the positive polarity, but it is allowed that the first polarity is the positive polarity and the second polarity is the negative polarity.

In the embodiment, the reluctor r is constituted by the protrusion formed on the outer periphery of the rotor 2A, the first portion r1 of the reluctor r has the first width W1 and extends circumferentially of the crankshaft, and the second portion r2 has the second width W2 smaller than the first width and extends circumferentially of the crankshaft. The first portion r1 and the second portion r2 are formed to have the uniform height circumferentially of the crankshaft.

However, the reluctor provided on the rotor of the signal generator used in the present invention is not limited to the reluctor used in the embodiment. For example, it is allowed that the first portion of the reluctor has a first height and extends circumferentially of the crankshaft, and the second portion has a second height smaller than the first height and extends circumferentially of the crankshaft. In this case, the first portion and the second portion have a uniform width circumferentially of the crankshaft.

## Claims

1. An ignition device for an internal combustion engine comprising:

   an ignition circuit (6) that generates a high voltage for ignition to be supplied to an ignition plug (PL) mounted to a cylinder of the internal combustion engine (15) when receiving an ignition signal (Si); and
   an ignition position control portion (10) that controls an ignition position as a crank angle position that provides said ignition signal to said ignition circuit (6),
   an inductor signal generator (2) is provided comprised so as to generate a first pulse signal (P1) having a first polarity when a crank angle position of said internal combustion engine matches a first crank angle position ($\theta$1) set to a position sufficiently advanced from a top dead center position (TDC) as a crank angle position corresponding to a top dead center of a piston in a compression stroke, generate a second pulse signal (P2) having a second polarity when the crank angle position of said engine matches a second crank angle position (θ2) set to a position delayed from said first crank angle position (θ1), advanced from said top dead center position (TDC) and suitable as an ignition position in idling, and generate a third pulse signal (P3) having said second polarity when the crank angle position of said engine matches a third crank angle position (θ3) set to a position delayed from the top dead center position (TDC) and suitable as a first ignition position at the start of said engine, during forward rotation of said internal combustion engine (15), **characterised in that** said ignition position control portion (10) comprises:

start time ignition signal providing means (11) for providing an ignition signal (Si) to said ignition circuit (6) at said third crank angle position (θ3) in response to said third pulse signal (P3) when it is detected that said signal generator (2) successively generates the second pulse signal (P2) and the third pulse signal (P3) having the same polarity for causing first ignition at the start of said internal combustion engine;

idling time ignition signal providing means (12) for providing an ignition signal to said ignition circuit (6) at said second crank angle position (θ2) in response to said second pulse signal (P2) when said first ignition is completed and a rotational speed of said internal combustion engine is an idling rotational speed or less; and

normal rotation time ignition signal providing means (13) for arithmetically operating an ignition position with respect to a control condition including said rotational speed and providing an ignition signal to said ignition circuit (6) at a crank angle position that matches the arithmetically operated ignition position when the rotational speed of said internal combustion engine exceeds said idling rotational speed.

2. The ignition device for an internal combustion engine according to claim 1, **characterized in that** said signal generator (2) comprises:

a rotor (2A) that includes a reluctor (r) having a first portion (r1) extending circumferentially of a crankshaft of said internal combustion engine and a second portion (r2) placed rearward of said first portion in a forward rotational direction of said crankshaft, having a first edge (e1) and a second edge (e2) formed at one and the other circumferential ends, and having a middle edge (em) formed at a boundary between said first portion (r1) and said second portion (r2), and is provided so as to rotate with said crankshaft; and

a signal armature (2B) that generates a pulse signal when detecting each edge of said reluctor (r), and

said signal generator (2) is comprised so that said signal armature detects the first edge (e1) of said reluctor and generates said first pulse signal (P1) when the crank angle position of said internal combustion engine matches said first crank angle position (θ1) during forward rotation of said internal combustion engine, said signal armature detects the middle edge (em) of said reluctor and generates said second pulse signal (P2) when the crank angle position of said internal combustion engine matches said second crank angle position (θ2) during forward rotation of said internal combustion engine, and said signal armature detects said second edge (e2) and generates said third pulse signal (P3) when said crank angle position matches said third crank angle position (θ3) during forward rotation of said internal combustion engine.

3. The ignition device for an internal combustion engine according to claim 2, **characterized in that** said reluctor (r) is constituted by a protrusion formed on an outer periphery of said rotor (2A), said first portion (r1) of said reluctor has a first width (W1) and extends circumferentially of said crankshaft, said second portion (r2) has a second width (W2) smaller than said first width (W1) and extends circumferentially of said crankshaft, and said first portion and said second portion have a uniform height circumferentially of said crankshaft.

4. The ignition device for an internal combustion engine according to claim 2, **characterized in that** said reluctor (r) is constituted by a protrusion formed on an outer periphery of said rotor (2A), said first portion (r1) of said reluctor has a first height and extends circumferentially of said crankshaft, said second portion (r2) has a second height smaller than said first height and extends circumferentially of said crankshaft, and said first portion and said second portion have a uniform width circumferentially of said crankshaft.

**Patentansprüche**

1. Zündvorrichtung für einen Verbrennungsmotor mit

- einem Zündschaltkreis (6), welcher bei Empfang eines Zündsignales (Si) zum Zünden eine Hochspannung erzeugt, welche an eine Zündkerze (PL) anlegbar ist, welche an einem Zylinder des Verbrennungsmotors (15) angeordnet ist, und

- einem Zündposition-Steuerabschnitt (10), welcher eine Zündposition über eine Kurbelwinkelposition steuert, welche das Zündsignal zu dem Zündschaltkreis (6) auslöst,

- wobei ein Induktionssignalgenerator (2) vorgesehen und derart ausgebildet ist,

-- dass ein erstes Pulssignal (P1) mit einer ersten Polarität erzeugt wird, wenn eine Kurbelwinkelposition des Verbrennungsmotors einer ersten Kurbelwinkelposition (θ1) entspricht, welche auf eine Position festgesetzt ist, welche ausreichend vor einer oberen Totpunkt-Position (TDC) als eine Kurbelwinkelposition liegt, welche einem oberen Totpunkt eines Kolbens in einem Kompressionshub entspricht,

-- dass ein zweites Pulssignal (P2) mit einer zweiten Polarität erzeugt wird, wenn die Kurbelwinkelposition des Motors einer zweiten Kurbelwinkelposition (θ2) entspricht, welche auf eine Position festgelegt ist, welche zeitverzögert zu der ersten Kurbelwinkelposition (θ1) ist, welche vor der oberen Totpunkt-Position (TDC) liegt und als eine Zündposition im Leerlauf geeignet ist, und

-- dass ein drittes Pulssignal (P3) mit einer zweiten Polarität erzeugt wird, wenn die Kurbelwinkelposition des Motors einer dritten Kurbelwinkelposition (θ3) entspricht, welche auf eine Position festgesetzt ist, welche von der oberen Totpunkt-Position (TDC) zeitverzögert ist und als eine erste Zündposition beim Start des Motors während einer Vorwärtsdrehung der Verbrennungsmaschine (15) geeignet ist,

**dadurch gekennzeichnet,**
**dass** der Zündposition-Steuerabschnitt (10) aufweist:

- eine Startzeit-Zündsignal-Erzeugungseinrichtung (11) zum Vorsehen eines Zündsignals (Si) an den Zündschaltkreis (6) bei der dritten Kurbelwinkelposition (θ3) in Reaktion auf das dritte Pulssignal (P3), wenn ermittelt wird, dass der Signalgenerator (2) nacheinander das zweite Pulssignal (P2) und das dritte Pulssignal (P3) mit der gleichen Polarität erzeugt, um beim Start des Verbrennungsmotors eine erste Zündung zu bewirken;

- eine Leerlaufzeit-Zündsignal-Erzeugungseinrichtung (12) zum Vorsehen eines Zündsignals an dem Zündschaltkreis (6) bei der zweiten Kurbelwinkelposition (θ2) in Abhängigkeit von dem zweiten Pulssignal (P2), wenn die erste Zündung abgeschlossen ist und eine Drehzahl des Verbrennungsmotors einer Leerlaufdrehzahl oder einer geringeren Drehzahl entspricht; und

- eine Normaldrehzahlzeit-Zündsignal-Erzeugungseinrichtung (13) zum rechnerischen Bestimmen einer Zündposition unter Berücksichtigung einer Steuerbedingung, welche die Drehzahl einschließt, und zum Vorsehen eines Zündsignals an den Zündschaltkreis (6) bei einer Kurbelwinkelposition, welche der rechnerisch bestimmten Zündposition entspricht, wenn die Drehzahl des Verbrennungsmotors eine Leerlaufdrehzahl übersteigt.

2. Zündvorrichtung für einen Verbrennungsmotor nach Anspruch 1,
**dadurch gekennzeichnet,**
**dass** der Signalgenerator (2) aufweist:

- einen Rotor (2A), welcher ein Impulsgeberrad (r) mit einem ersten Abschnitt (r1), welcher sich in Umfangsrichtung einer Kurbelwelle des Verbrennungsmotors erstreckt, und einem zweiten Abschnitt (r2), welcher in einer Vorwärtsdrehrichtung der Kurbelwelle hinter dem ersten Abschnitt angeordnet ist, wobei eine erste Kante (e1) und eine zweite Kante (e2) vorgesehen sind, welche an dem einen und dem anderen in Umfangsrichtung liegenden Enden ausgebildet sind, und mit einer mittleren Kante (em), welche an einer Grenze zwischen dem ersten Abschnitt (r1) und dem zweiten Abschnitt (r2) gebildet ist, und der Rotor (2A) ausgebildet ist, mit der Kurbelwelle zu drehen, und

- einem Signalanker (2B), welcher beim Ermitteln jeder Kante des Impulsgeberrads (r) ein Pulssignal erzeugt, und

- der Signalgenerator (2) derart ausgebildet ist, dass

-- der Signalanker die erste Kante (e1) des Impulsgeberrades erfasst und das erste Pulssignal (P1) erzeugt, wenn die Kurbelwinkelposition des Verbrennungsmotors der ersten Kurbelwinkelposition (θ1) während einer Vorwärtsdrehung des Verbrennungsmotors entspricht,

-- der Signalanker die mittlere Kante (em) des Impulsgeberrades erfasst und das zweite Pulssignal (P2) erzeugt, wenn die Kurbelwinkelposition des Verbrennungsmotors bei einer Vorwärtsdrehung des Verbrennungsmotors der zweiten Kurbelwinkelposition (θ2) entspricht, und

-- der Signalanker die zweite Kante (e2) erfasst und das dritte Pulssignal (B3) erzeugt, wenn die Kurbelwinkelposition während einer Vorwärtsdrehung des Verbrennungsmotors der dritten Kurbelwinkelposition (θ3) entspricht.

3. Zündvorrichtung für einen Verbrennungsmotor nach Anspruch 2,
**dadurch gekennzeichnet,**
**dass** das Impulsgeberrad (r) durch einen Vorsprung gebildet ist, welcher an einem Außenumfang des Rotors (2A) ausgebildet ist,
**dass** der erste Abschnitt (r1) des Impulsgeberrades eine erste Breite (W1) besitzt und sich in Umfangsrichtung der Kurbelwelle erstreckt,
**dass** der zweite Abschnitt (r2) eine zweite Breite (W2) besitzt, welche kleiner als die erste Breite (W1) ist, und sich in Umfangsrichtung der Kurbelwelle erstreckt, und
**dass** der erste Abschnitt und der zweite Abschnitt eine gleiche Höhe in Umfangsrichtung der Kurbelwelle haben.

4. Zündvorrichtung für einen Verbrennungsmotor nach Anspruch 2,
**dadurch gekennzeichnet,**
**dass** das Impulsgeberrad (r) durch einen Vorsprung gebildet ist, welcher an einem Außenumfang des Rotors (2A) ausgebildet ist,
**dass** der erste Abschnitt (r1) des Impulsgeberrads eine erste Höhe hat und sich in Umfangsrichtung der Kurbelwelle erstreckt,
**dass** der zweite Abschnitt (r2) eine zweite Höhe hat, welche kleiner als die erste Höhe ist, und sich in Umfangsrichtung der Kurbelwelle erstreckt, und
**dass** der erste Abschnitt und der zweite Abschnitt eine gleiche Breite in Umfangsrichtung der Kurbelwelle haben.

**Revendications**

1. Dispositif d'allumage pour un moteur à combustion interne, comprenant :

un circuit (6) d'allumage, qui produit une haute tension pour un allumage à fournir à une bougie (PL) d'allumage montée sur un cylindre du moteur (15) à combustion interne à la réception d'un signal (Si) d'allumage et
une partie (10) de commande de position d'allumage, qui commande une position d'allumage sous la forme d'une position d'un angle de vilebrequin que le signal d'allumage fournit au circuit (6) d'allumage,
il est prévu un générateur (2) de signal d'inducteur, de manière à produire un premier signal (P1) impulsionnel ayant une première polarité lorsqu'une position de l'angle de vilebrequin du moteur à combustion interne correspond à une première position (θ1) d'angle de vilebrequin fixée à une position suffisamment avancée de la position (TDC) de point mort haut, en tant que position d'angle de vilebrequin correspondant à un point mort haut d'un piston dans une course de compression, produit un deuxième signal (P2) impulsionnel ayant une deuxième polarité lorsque la position d'angle de vilebrequin du moteur correspond à une deuxième position (θ2) d'angle de vilebrequin fixée à une position retardée de la première position (θ1) d'angle de vilebrequin, avancée de la position (TDC) de point mort haut et qui convient comme position de l'allumage au ralenti, et produit un troisième signal (P3) impulsionnel ayant une deuxième polarité lorsque la position d'angle de vilebrequin du moteur correspond à une troisième position (θ3) d'angle de vilebrequin fixée à une position retardée de la position (TDC) de point mort haut et qui convient, comme première position d'allumage au démarrage du moteur, pendant une rotation vers l'avant du moteur (15) à combustion interne, **caractérisé en ce que**
la partie (10) de commande de position de l'allumage comprend :

des moyens (11) fournissant un signal d'allumage de temps de démarrage pour fournir un signal (Si) d'allumage au circuit (6) d'allumage à la troisième position (θ3) d'angle de vilebrequin en réaction au troisième signal (P3) impulsionnel lorsqu'il est détecté que le générateur (2) de signal produit successivement le deuxième signal (P2) impulsionnel et le troisième signal (P3) impulsionnel ayant la même polarité pour provoquer un premier allumage au démarrage du moteur à combustion interne;
des moyens (12) fournissant un signal d'allumage de temps de ralenti pour fournir un signal d'allumage au circuit (6) d'allumage à la deuxième position (θ2) d'angle de vilebrequin en réaction au deuxième signal (P2) impulsionnel lorsque le premier allumage est achevé et lorsqu'une vitesse de rotation du moteur à combustion interne est une vitesse de rotation de ralenti ou moins et
des moyens (13) fournissant un signal d'allumage en temps de rotation normal pour déterminer arithmétiquement une position d'allumage par rapport à un état de commande incluant la vitesse de rotation et pour fournir un signal d'allumage au circuit (6) d'allumage à une position d'angle de vilebrequin, qui correspond à la position de l'allumage déterminée arithmétiquement lorsque la vitesse de rotation du moteur à combustion interne dépasse la vitesse de rotation au ralenti.

2. Dispositif d'allumage pour un moteur à combustion interne suivant la revendication 1, **caractérisé en ce que** le générateur (2) de signal comprend :

un rotor (2A), qui comprend une réluctance (r) ayant une première partie (r1) s'étendant circonférentiellement d'un vilebrequin du moteur à combustion interne et une deuxième partie (r2) placée en arrière de la première partie dans un sens de rotation vers l'avant du vilebrequin ayant un premier bord (e1) et un deuxième bord (e2) formé à l'une et l'autre des extrémités circonférentielles et ayant un bord (em) médian formé à une limite entre la première partie (r1) et la deuxième partie (r2), et qui est prévu de manière à tourner avec le vilebrequin et

une armature (2B) de signal, qui produit un signal impulsionnel à la détection de chaque bord de la réluctance (r) et

le générateur (2) de signal est tel que l'armature de signal détecte le premier bord (e1) de la réluctance et produit le premier signal (P1) impulsionnel lorsque la position d'angle de vilebrequin du moteur à combustion interne correspond à la première position ($\theta1$) d'angle de vilebrequin pendant une rotation vers l'avant du moteur à combustion interne, l'armature de signal détecte le bord (em) médian de la réluctance et produit le deuxième signal (P2) impulsionnel lorsque la position d'angle de vilebrequin du moteur à combustion interne correspond à la deuxième position ($\theta2$) d'angle de vilebrequin pendant la rotation vers l'avant du moteur à combustion interne et l'armature de signal détecte le deuxième bord (e2) et produit le troisième signal (P3) impulsionnel lorsque la position d'angle de vilebrequin correspond à la troisième position ($\theta3$) d'angle de vilebrequin pendant la rotation vers l'avant du moteur à combustion interne.

3. Dispositif d'allumage pour un moteur à combustion interne suivant la revendication 2, **caractérisé en ce que** la réluctance (r) est constituée par une protubérance formée sur une périphérie extérieure du rotor (2A), la première partie (r1) de la réluctance a une première largeur (W1) et s'étend circonférentiellement du vilebrequin, la deuxième partie (r2) a une deuxième largeur (W2) plus petite que la première (W1) et s'étend circonférentiellement du vilebrequin, et la première partie et la deuxième partie ont une hauteur uniforme circonférentiellement du vilebrequin.

4. Dispositif d'allumage pour un moteur à combustion interne suivant la revendication 2, **caractérisé en ce que** la réluctance (r) est constituée par une protubérance formée sur une périphérie extérieure du rotor (2A), la première partie (r1) de la réluctance a une première hauteur et s'étend circonférentiellement du vilebrequin, la deuxième partie (r2) a une deuxième hauteur plus petite que la première hauteur et s'étend circonférentiellement du vilebrequin, et la première partie et la deuxième partie ont une largeur uniforme circonférentiellement du vilebrequin.

# F ig 1

Fig. 2A

Fig. 2B

Fig. 3

VOLTAGE

Fig. 4

Fig. 5

# Fig 6

10 IGNITION POSITION CONTROL PORTION

START TIME IGNITION SIGNAL PROVIDING MEANS — 11

2

SIGNAL GENERATOR

IDLING TIME IGNITION SIGNAL PROVIDING MEANS — 12

6

IGNITION CIRCUIT

15

INTERNAL COMBUSTION ENGINE

NORMAL ROTATION TIME IGNITION SIGNAL PROVIDING MEANS — 13

# Fig. 7

```
┌─────────────────────────────────────────────┐
│ INTERRUPTION PROCESSING EXECUTED WHEN        │
│ SIGNAL GENERATOR GENERATES NEGATIVE SIGNAL   │
└─────────────────────────────────────────────┘
                        │
        S701            ▼
          ┌──────────────────────────┐
          │ CLEAR FLAG INDICATING THAT│
          │ POSITIVE SIGNAL IS GENERATED│
          └──────────────────────────┘
                        │
  S702                  ▼
          ╱──────────────────────╲          No      S703
         ╱   IS PRESENT ENGINE STATE ╲─────────────────────
         ╲    A STATE AT START?      ╱              │
          ╲──────────────────────╱                 ▼
               │              ┌──────────────────────────────────────┐
              Yes             │ CLEAR IGNITION PROCESSING RESERVING FLAG│
               │              └──────────────────────────────────────┘
               │                          │         S704
               │                          ▼
               │              ╱──────────────────────╲      Yes
               │             ╱     IDLING IGNITION?    ╲─────────
               │             ╲──────────────────────╱          │
               │                    │ No      S705             │
               │                    ▼                          │
               │              ┌──────────────────┐             │
               │              │ SET IGNITION TIMER│             │
               │              └──────────────────┘             │
               │                    │                          │
               │                    └──────────┬───────────────┘
               ▼                               │
          ┌──────────┐◄─────────────────────────
          │  FINISH  │
          └──────────┘
```

# Fig. 8

**INTERRUPTION PROCESSING EXECUTED WHEN SIGNAL GENERATOR GENERATES POSITIVE SIGNAL**

S801 — IS PRESENT STATE A STATE AT START? — No → S805

Yes

S802 — ARE POSITIVE SIGNALS SUCCESSIVELY GENERATED? — No → S804 SET FLAG INDICATING THAT POSITIVE SIGNAL IS GENERATED

Yes

S803 IGNITION PROCESSING

S805 ARE POSITIVE SIGNALS SUCCESSIVELY GENERATED? — No → S806 SET FLAG INDICATING THAT POSITIVE SIGNAL IS GENERATED

Yes

S807 HAS NOT IGNITION PROCESSING BEEN PERFORMED? — No

Yes

S808 IGNITION PROCESSING

S809 CLEAR IGNITION PROCESSING RESERVING FLAG

FINISH

EP 1 918 579 B1

# Fig. 9

```
┌─────────────────────────┐
│  TIMER INTERRUPTION     │
│  PROCESSING             │
└─────────────────────────┘
            │                    ─ S901
            ▼
┌─────────────────────────┐
│  IGNITION PROCESSING    │
└─────────────────────────┘
            │                    ─ S902
            ▼
┌──────────────────────────────────────────┐
│ CLEAR IGNITION PROCESSING RESERVING FLAG  │
└──────────────────────────────────────────┘
            │
            ▼
       ┌──────────┐
       │  FINISH  │
       └──────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001200776 A
- US 20050139194 A1
- US 20020112711 A1